# EUROPEAN PATENT SPECIFICATION

(11) **EP 3 844 715 B1**
(45) Date of publication and mention of the grant of the patent: **09.08.2023**
(21) Application number: 19765422.1
(22) Date of filing: 29.08.2019
(51) Int. Cl.: G06T 7/20

(54) **APPARATUS AND METHOD FOR IDENTIFYING ORGANISMS**
VORRICHTUNG UND VERFAHREN ZUR BESTIMMUNG VON ORGANISMEN
DISPOSITIF ET METHODE POUR IDENTIFICATION D'ORGANISMES

(30) Priority: 31.08.2018 DK PA201870565
(43) Date of publication of application: 07.07.2021
(73) Proprietor: FaunaPhotonics Agriculture & Enviromental A/S, 2450 Copenhagen K (DK)
(72) Inventor: RYDHMER, Klas, 214 20 Malmö (SE); STRAND, Alfred, Gösta, Victor, 214 45 Malmö (SE); MALMROS, Ludvig, 214 21 Malmö (SE)
(74) Representative: Guardian IP Consulting I/S
(86) International application number: PCT/EP2019/073119
(87) International publication number: WO 2020/043841

(56) References cited:
- WO-A1-2015/160958
- WO-A1-2018/078166
- US-A1- 2016 055 400
- ELIEZER GURARIE ET AL: "Estimating 3D Movements from 2D Observations Using a Continuous Model of Helical Swimming", BULLETIN OF MATHEMATICAL BIOLOGY ; A JOURNAL DEVOTED TO RESEARCHAT THE JUNCTION OF COMPUTATIONAL, THEORETICAL AND EXPERIMENTAL BIOLOGY, SPRINGER-VERLAG, NE, vol. 73, no. 6, 20 August 2010 (2010-08-20), pages 1358-1377, XP019896500, ISSN: 1522-9602, DOI: 10.1007/S11538-010-9575-7
- ALEM GEBRU ET AL: "Multiband modulation spectroscopy for the determination of sex and species of mosquitoes in flight", JOURNAL OF BIOPHOTONICS, vol. 11, no. 8, 16 April 2018 (2018-04-16) , XP055638826, DE ISSN: 1864-063X, DOI: 10.1002/jbio.201800014
- R.D Tillett ET AL: "An optical method for the detection of sea lice, Lepeophtheirus salmonis", Aquacultural Engineering, 1 January 1999 (1999-01-01), pages 33-48, XP055229538, DOI: 10.1016/S0144-8609(99)00022-9 Retrieved from the Internet: URL:http://www.sciencedirect.com/science/a rticle/pii/S0144860999000229/pdfft?md5=596 7ec75db9e1ea81c2818ac9853e17d&pid=1-s2.0-S 0144860999000229-main.pdf [retrieved on 2015-11-19]
- RAMSDEN M W ET AL: "A review of economic thresholds for invertebrate pests in UK arable crops", CROP PROTECTION, ELSEVIER SCIENCE, GB, vol. 96, 24 January 2017 (2017-01-24), pages 30-43, XP029951081, ISSN: 0261-2194, DOI: 10.1016/J.CROPRO.2017.01.009
- DAVIES E R ET AL: "COMBINATION LINEAR FEATURE DETECTOR FOR EFFECTIVE LOCATION OF INSECTS IN GRAIN IMAGES", MEASUREMENT SCIENCE AND TECHNOLOGY, IOP, BRISTOL, GB, vol. 13, no. 12, 1 December 2002 (2002-12-01), pages 2053-2061, XP001201133, ISSN: 0957-0233, DOI: 10.1088/0957-0233/13/12/334

## Description

### Technical field

The present disclosure relates to an apparatus and method for identifying organisms, such as insects or other flying or jumping organisms.

### Background

There are many applications where it is desirable to detect and identify organisms. For example, in pest control applications, it is desirable to identify the presence of certain pests so as to target the pest control to specific pests.

In particular, it may often be desirable to identify organisms without a need to capture, kill, or otherwise immobilize the organism. Moreover, it may be desirable to remotely identify organisms.

WO 2018/182440 discloses a process for detecting and identifying insects based on detected wing beat frequencies and/or other indicators derived from backscattered light off the insects. While this technique has been found to be an efficient method for identifying insects, there remains a need for alternative methods and for methods that may be applied to organisms that may move without the use of wings.

US 2016/0055400 discloses an avian detection system that includes first and second imagers. A first wide field of view imager assists with simultaneously monitoring a very large airspace and images any number of potential moving objects. A second high zoom imager optically zooms on relevant detected moving objects and can provide rapid information as to the distance of the moving object and additional information related to finer optical characteristics of the moving object to facilitate species identification of a flying avian. However, this prior art system requires relatively complex equipment including two imagers. Moreover, many small pests such as flying insects move relatively fast and often in larger swarms, thereby making them difficult to reliably detect by a two-imager system.

Alem Gebru ET AL: "Multiband modulation spectroscopy for the determination of sex and species of mosquitoes in flight", Journal of Biophotonics, vol. 11, no. 8, page e201800014, 16 April 2018 discloses an apparatus for detecting and identifying flying or jumping insects, the apparatus comprising: an illumination module configured to simultaneously illuminate an entire target space and comprising a light source configured to emit a diverging beam of incoherent visible light along an illumination direction; a detector module comprising an imaging system and an image sensor, the detector module being configured to receive backscattered light from organisms inside the target space and to capture a plurality of images of the illuminated target space, the target space comprising one or more organisms moving about said target space, wherein the imaging system defines an imaging optical axis wherein the imaging optical axis and the illumination direction define an angle between each other; a processor configured to detect, from the captured images, a trajectory of an organism moving about said target space.

It thus remains desirable to provide a low complex system that allows fast detection of small insects.

### Summary

According to one aspect, disclosed herein are embodiments of an apparatus for detecting and identifying moving organisms. The current invention provides an apparatus according to appended claim 1. Further embodiments are disclosed in the dependent claims.

The inventors have realized that different types of organisms, such as different species of organisms, may be distinguished from each other by detecting characteristic features of their respective movement trajectories while the organisms move about an illuminated target space.

Illumination of a target space and observing organisms moving through the illuminated target space allows for a low complex system which does not require multiple imager systems or zoom optics. Moreover, as the detection speed of the trajectories is mainly determined by the frame rate of the image sensor, trajectories of even fast moving organisms may be reliably detected. Moreover, trajectories of multiple organisms moving concurrently through the illuminated target space may be identified.

The trajectory may be defined as a path in 2D or 3D space, as a 2D projection or other 2D representation of a path in 3D space. The trajectory may be represented as a sequence of points, as a curve - e.g. a curve computed from a sequence of points - or in another suitable manner.

In some embodiments, the processor is further configured to determine a property of the organism and/or of the movement of the organism at or along at least a part of the trajectory, such as a velocity of the movement at or along at least a part of the trajectory, a change in appearance, of the organism at or along at least a part of the trajectory, and/or the like. Recognizing the type of organism may thus include recognizing the type of organism from the detected trajectory and from the determined property.

The recognition of the type of organism from the trajectory may be performed by a suitable classifier, e.g. based on certain distinguishing features of the trajectory. To this end, the processor may implement a suitable classification model, e.g. based on feature detection, neural networks.

Examples of applications of the method described herein include the detection of flying or jumping insects in farming or forestry production facilities, such as the detection of Cabbage Stem Flee Beatle. Further examples include the detection of Salmon lice, in salmon farms or of other swimming parasites in aquaculture facilities.

The detector module may be arranged stationary or movable, e.g. on a manned or unmanned vehicle moving around the target space or moving about inside the target space. The vehicle may be a ground vehicle, i.e. a vehicle that operates while in contact with the ground. A ground vehicle may e.g. drive on wheels or the like. For example, the ground vehicle may be a tractor or other farming vehicle. Other examples of vehicles include aerial vehicles such as an airplane, a helicopter or the like or water vehicles, like vehicles floating at the surface or submerged vehicles.

The illuminated target space may have a predetermined shape, size and position relative to the illumination module and relative to the imaging system, e.g. relative to an aperture and/or an optical axis of the imaging system. In particular, the predetermined target space may, during the entire detection process, be stationary relative to the imaging system and to the illumination module. Accordingly the imaging system may comprise one or more lenses that define an optical axis of the imaging system and that define a focal length of the imaging system. The focal length may be fixed during the entire detection process. Moreover, the optical axis may be fixed, e.g. relative to the illumination module and/or relative to a housing of the apparatus, during the entire detection process. However, it will be appreciated that the apparatus may allow the size, shape and/or relative position of the target space to be pre-configured and adapted to a specific measurement environment, e.g. by changing a relative position and/or orientation of the illumination module and the imaging system. The imaging system may further comprise an aperture.

The target space may be a surface on which the organisms move or a 3D volume, e.g. a volume of air or water. In some embodiments, the target space is a 3D detection volume. The detection volume may have a variety of shapes and sizes, such as box-shaped, cylindrical, ball-shaped, cone-shaped, pyramidal, frusto-conical, frusto-pyramidal, etc. The detection volume may have a size of at least 0.2 m³, such as at least 0.5 m³, such as at least 1 m³, such as at least 2 m³, such as at least 3 m³. In some embodiments, the detection volume has a size of less than 20 m³, such as less than 10 m³, such as at less than 5 m³, thereby facilitating uniform illumination at high brightness of the entire detection volume while allowing for reliable detection of trajectories. In some embodiments, the detection volume has an aspect ratio, e.g. defined as a ratio of a largest edge to a smallest edge of a minimum bounding box of the detection volume, of no more than 10:1, such as no more than 5:1, such as no more than 3:1, such as no more than 2:1. For example, the aspect ratio may be between 1:1 and 10:1, such as between 1:1 and 5:1, such as between 1:1 and 3:1, such as between 2:1 and 3:1. It has turned out that a detection volume of at least 0.2 m³, such as at least 0.5 m³, such as at least 1 m³, such as at least 2 m³, such as at least 3 m³ is sufficient to reliably detect trajectories of multiple organisms so as to determine a size of a population of a specific organism. It has further turned out that a low aspect ratio of the detection volume allows trajectories of moving organisms, moving along different directions, to be tracked over a relative long period of time, thus allowing more accurate detection and identification of the organism. A convenient illumination of a relatively large target space, in particular a simultaneous illumination of the entire target space, with a compact illumination module may e.g. be provided when the illumination module is configured to emit a diverging beam of light, in particular a beam of light having a divergence angle in at least one direction of between 2° and 45°, such as between 10° and 30°, measured as a full angle between rays intersecting opposite ends of a beam diameter.

In general, it will be appreciated that the size and shape of the target space may depend on the type of organism to be detected and, in particular the typical moving patterns of the target organisms. To this end, the illumination module may e.g. include one or more optical elements, such as one or more reflectors and/or one or more lenses, that the light from the light source as a beam of light, such as a diverging beam of light, of a suitable cross-sectional shape towards the target space. For example, the beam of light may have a rectangular or round, e.g. oval or circular, cross section.

It will be appreciated that insects vary a lot in size and behavior. Insect sizes can vary from less than one mm to a few cm and movement patterns of insects can vary from insects standing still, hovering, in air to jumping insects with ballistic trajectories. Embodiments of the apparatus and insect sensor described herein have been found useful for various types of airborne insects, including flying insects having wings and jumping insects, such as jumping flea beetle, e.g. cabbage stem flea beetle (*psylliodes chrysocephala*).

Considering a jumping flea jumping to a height of h, the vertical speed by which the flea leaves the ground to reach this height can be estimated assuming a substantially ballistic flight path. For example, considering a flea jumping 0,5m above the ground the initial vertical speed of the flea will of the order of 3.2 m/s which gives and order of magnitude by which the ballistic insects move in space. In order to capture such a fast event involving insects having a size down to less than 5-10 mm, the detection volume, and hence the illuminated volume has to have an extent to cover the essential part of the trajectory and detection speed to resolve the motion in time. Moreover, the detector module needs to resolve such events in time and space.

The detection volume may be positioned close to the illumination module and the imaging system, thus allowing efficient illumination and facilitating imaging with sufficient resolution so as to detect small organisms, e.g. insects having a largest extent of between 0.5 mm and 10 cm. For example, the boundary of the detection volume closest to an aperture of the imaging system may be between 10 cm and 10 m away from the aperture of the imaging system, such as between 10 cm and 5 m, such as between 10 cm and 2 m. The boundary of the detection volume furthest from an aperture of the imaging system may be between 3 m and 100 m away from the aperture of the imaging system, such as between 5 m and 20 m, such as between 8 m and 12 m. The apparatus comprises an illumination module configured to illuminate the target space, in particular the entire target space. According to the invention, the illumination module comprises a light source that is configured to emit incoherent light. Suitable light sources include light-emitting diodes (LEDs) and halogen lamps, as these are able to illuminate large detection volumes with sufficient light intensity. Incoherent light sources are useful to provide a uniform/homogeneous, speckle free, illumination of the target space, in particular a simultaneous illumination of a larger target space without the need for any scanning operation. This reduces the complexity of the optical system and allows reliable detection of trajectories even of fast-moving organisms.

Nevertheless, outside the scope of the current invention, other light sources, including coherent light sources, such as lasers, may be used instead. In some embodiments, the light source is configured to output light continuously while, in other embodiments, the light is turned on and off intermittently, e.g. in pulses.

The target space may e.g. be a 3D detection volume or a plane or curved surface from which the apparatus obtains sensor input suitable for the detection of organisms. A 3D target space may e.g. completely or partly be defined by the field of view and depth of field of the imaging system. In particular, the target space may be defined as an overlap of the space illuminated by the illumination module and by a space defined by the field of view and depth of field of the imaging system. To this end, in some embodiments, the imaging system defines an imaging optical axis, which defines a viewing direction. Moreover, the illumination module is configured to emit a beam of light along an illumination direction, and the imaging optical axis and the illumination direction define an angle between each other, the angle being between 1° and 30°, such as between 5° and 20°.

According to the invention, the illumination module comprises a light source that is configured to emit incoherent infrared and/or near-infrared light, although in some devices outside of the scope of the current invention, coherent light, visible light, or light in one or more other wavelength ranges may be used. Infrared and/or near-infrared light (such as light in the wavelength range between 700 nm and 1500 nm, such as between 700 nm and 1000 nm) is not detectable by many insects, and thus does not influence the insect's behaviour. In some embodiments, the illumination module is configured to selectively illuminate the target space with light of two or more wavelength ranges, in particular two or more mutually spaced-apart wavelength ranges. To this end, the illumination module may include a first light source, e.g. comprising one or more LEDs, configured to selectively emit light of a first wavelength range. The illumination module may further include a second light source, e.g. comprising one or more LEDs, configured to selectively emit light of a second wavelength range which may be spaced-apart from the first wavelength range. The detector module may be configured to selectively detect the selected wavelength ranges. In one embodiment, the illumination module is configured to emit light at a first wavelength range at 810 nm +/- 25 nm and light at a second wavelength range at 980 nm +/- 25 nm. Such a multispectral illumination system facilitates color detection of moving insects.

In some embodiments, the detector module comprises a digital camera implementing the imaging system and the image sensor, in particular a camera having a field of view and a depth of field large enough to record focused images of the entire target space.

It has been found that the trajectory-based detection of organisms described herein is particularly useful in a detection system using multiple detection techniques as respective indicators for different types of organisms and configured to identify detected organisms based on a classifier using multiple indicators as inputs. For example, the trajectory-based detection may be combined with one or more of the detection techniques described below and in WO 2018/182440, such as the detection of wing beat frequencies, colors, shapes, melanisation, etc. In particular, illumination of the target space further facilitates reliable detection of other indicators, in particular in combination with the detection of melanisation and/or wing beat frequency.

To this end, in some embodiments, the apparatus comprises one or more additional detectors, such as additional optical detectors e.g. including one or more photodiodes or photodiode arrays. Individual photodiodes that receive light from the entire target space or from a part of the target space allow for a fast time-resolved detection of changes in the intensity of backscattered light. Such signals may be used to determine wing beat frequencies of flying pests which, in turn, may be used to detect the presence of pests and, optionally, to distinguish between different types of pests based on properties of the wing beat patterns, e.g. the relative amplitudes of multiple frequencies in a frequency spectrum associated with a detected pest event. It will be appreciated that, in some embodiments, the imaging system and image sensor may be used to detect one or more of the additional indicators.

In some embodiments the apparatus comprises an array of photodiodes, e.g. a linear array or a 2D array. The apparatus may be configured to direct light from different parts of the target space onto respective photo-diodes of the array, thus allowing a space-resolved detection of organisms based on the photodiodes.

In some embodiments, the photodiode or photodiode array is configured to selectively detect light at a predetermined wavelength or small wavelength band. In some embodiments, the detector module comprises one or more photodiodes or photodiode arrays configured to selectively detect light at two or more wavelengths or small wavelength bands where the two or more wavelengths or wavelength bands are spaced apart from each other and do not overlap each other. This may e.g. be achieved by a single photodiode array where respective bandpass filters are selectively and alternatingly positioned in front of the photodiode or photodiode array. Alternatively, the detector may include two or more photodiodes or photodiode arrays, each configured to detect light at a respective wavelength or wavelength band. In particular a detector module comprising a photodiode or photodiode array for detecting light at 808 nm and another photodiode or photodiode array for detecting light at 970 nm has been found to be suitable for detecting and distinguishing different type of pests, e.g. based on a ratio of backscattered light at the respective wavelength. Generally, in some embodiments, the one or more photodiodes comprise at least a first photodiode configured to selectively detect light within a first wavelength band; and at least a second photodiode configured to selectively detect light within a second wavelength band, non-overlapping with the first wavelength band.

Accordingly, the processor may be configured to identify, from the captured images and, optionally, from detector signals from the one or more additional detectors, one or more types of organisms within the target space and, optionally, to determine a size of a population of the identified organisms within the target space.

To this end, the processor may process the captured images and, optionally, further detector signals so as to detect one or more trajectories and, optionally, other indicators indicative of the presence of one or more organisms in the target space and count the number of detected organisms, e.g. within a predetermined time period, a sliding window or the like, so as to determine an estimate of the population of the identified organism in the target volume. To this end, the processor may implement a suitable classifier model, e.g. based on neural networks and/or other classification techniques configured to determine a detected presence of an organism and/or an identify of a detected organism from the detected trajectories and, optionally, from a set of additional indicators.

The detection and/or identification of pests based on wing beat frequencies, melanisation ratios and pest glossiness is described in more detail in WO 2018/182440 and in Gebru et. AI: "Multiband modulation spectroscopy for the determination of sex and species of mosquitoes in flight", J. Biophotonics. 2018. While the above documents describe these indicators in the context of LIDAR system using the Scheimflug principle, the present inventors have realized that these techniques may also be applied to a detector system based on other light sources that illuminate an extended target volume rather than a narrow laser beam.

Based on the determined identity of detected organisms and/or based on an estimated population of an identified type of organism, the apparatus may be configured to display and/or store corresponding detection results. Alternatively or additionally, the apparatus may be configured to automatically control one or more processes responsive to the detection results. For example, the apparatus may be configured to control one or more pest control systems.

The present disclosure relates to different aspects including the apparatus described above and in the following, corresponding apparatus, systems, methods, and/or products, each yielding one or more of the benefits and advantages described in connection with one or more of the other aspects, and each having one or more embodiments corresponding to the embodiments described in connection with one or more of the other aspects and/or disclosed in the appended claims.

In particular, according to one aspect, the present disclosure relates to a computer-implemented method, executed by a data processing system, of identifying organisms from captured images.

Here and in the following, the term processor is intended to comprise any circuit and/or device suitably adapted to perform the functions described herein. In particular, the term processor comprises a general- or special-purpose programmable microprocessor, such as a central processing unit (CPU) of a computer or of another data processing system, a digital signal processor (DSP), an application specific integrated circuits (ASIC), a programmable logic arrays (PLA), a field programmable gate array (FPGA), a special purpose electronic circuit, etc., or a combination thereof.

A data processing system may be embodied as a single computer or as a distributed system including multiple computers, e.g. a client-server system, a cloud based system, etc.

According to another aspect, a computer program comprises program code adapted to cause, when executed by a data processing system, the data processing system to perform one or more of the methods described herein. The computer program may be embodied as a computer-readable medium, such as a CD-ROM, DVD, optical disc, memory card, flash memory, magnetic storage device, floppy disk, hard disk, etc. having stored thereon the computer program. According to one aspect, a computer-readable medium has stored thereon instructions which, when executed by one or more processing units, cause the processing unit to perform an embodiment of the process described herein.

Additional features and advantages will be made apparent from the following detailed description of embodiments that proceeds with reference to the accompanying drawings.

### BRIEF DESCRIPTION OF THE DRAWINGS

Preferred embodiments will be described in more detail in connection with the appended drawings, where
FIG. 1 shows a schematic view of an apparatus for identifying organisms.
FIG. 2 schematically illustrates an example of a process for detecting trajectories.
FIG. 3 schematically illustrates an example of captured images of a target space.
FIG. 4 schematically illustrates an example of a detector module of an embodiment of an apparatus described herein.
FIG. 5 schematically illustrates another example of a detector module of an embodiment of an apparatus described herein.
FIG. 6 shows a schematic view of another apparatus for identifying organisms.

### Detailed description

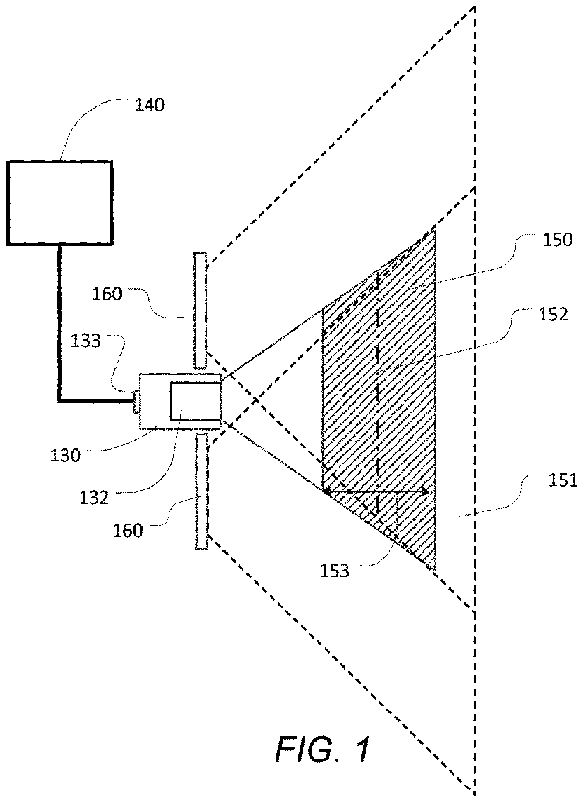

FIG. 1 schematically illustrates an embodiment of an apparatus for detecting organisms. The apparatus comprises a processing unit 140, a detector module 130 and an illumination module 160. In this example, the illumination module is formed as two elongated arrays of LEDs. Each array extends laterally from either side of the detector module. The arrays define an illumination volume 151 illuminated by both arrays. The detector module comprises an imaging system 132 operable to image an object plane 152 inside the illuminated volume onto an image plane of the imaging system. The field of view of the imaging system and the depth of field 153 of the imaging system are configured such that the imaging system images at least a portion of the illuminated volume onto an image plane of the imaging system. The portion of the illuminated volume imaged by the imaging system such that it can be detected by one or more detectors of the detector module, in particular an image sensor, and used for detection of organisms defines a target space in the form of a detection volume 150.

The detector module 130 includes an image sensor 133, e.g. a CCD or CMOS sensor or a 2D array of photodiodes, so as to allow imaging of organisms within the Illuminated volume. It has been found that imaging of organisms in a detection volume is suitable for identifying organisms based on trajectories of organisms moving within the detection volume, i.e. within the depth of field of the imaging system. This allows detection and identification even of organisms that are difficult or impossible to detect and identify based on wing beat frequencies. An example of such a organism is the jumping Cabbage Stem Flee Beatle.

For example, an imaging system based on a camera lens having f=24mm, f/2.8 and a ¾" image sensor configured to focus on an object plane at 2 m distance from the lens, the field of view is approximately 1.7 m × 1.7 m and the depth of field is approximately 1.3 m, thus resulting in a detection volume of approx. 3.7 m³.

It will be appreciated that other imaging systems may be used. Also, additional and alternative detectors may be used.

It will further be appreciated that the illumination module may be arranged in a different manner relative to the detector module and/or include a different type and/or number of light sources.

In order to maximize the amount of backscattered light from organisms inside the detection volume, it may be preferable to position the illumination module adjacent or otherwise close to the detector module, such that the illumination direction and the viewing direction, e.g. as defined by an optical axis of the imaging system, only define a relatively small angle between them, e.g. less than 30°, such as less than 20°.

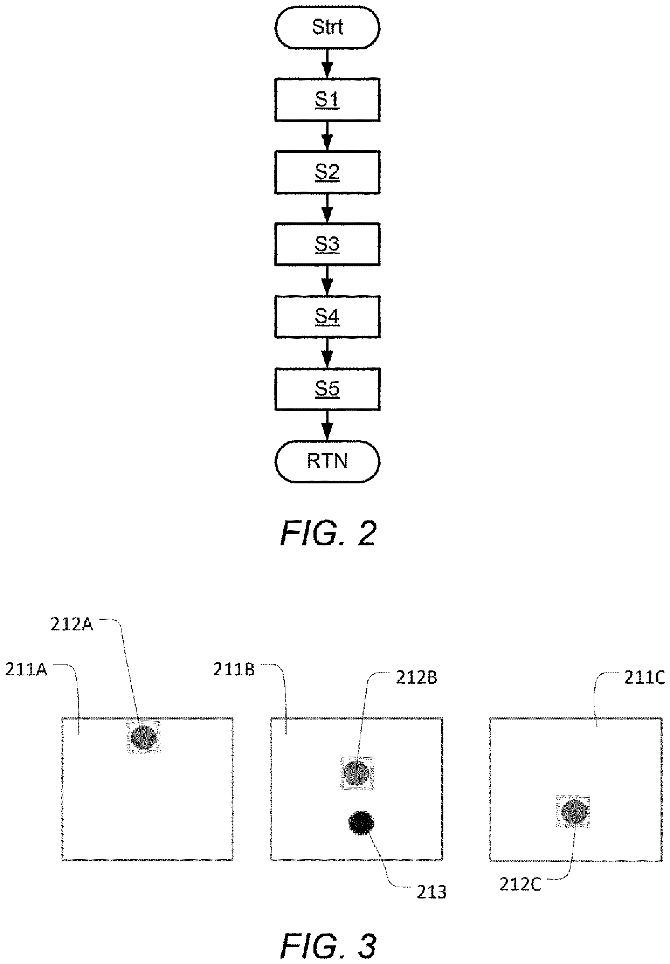

The detector module is communicatively coupled to the processing unit 140 and forwards the captured images and, optionally further detector signals, to the processing unit. The processing unit 140 may be a suitably programmed computer or another suitable processing device or system. The processing unit receives the images and, optionally, further detector signals from the detector module and processes the received data so as to detect and identify images in the target space, e.g. by performing a process as described with reference with FIGs. 2-3 below.

FIG. 2 schematically illustrates an example of a process for detecting trajectories.

In initial step S1, the process receives a sequence of digital images of a target space, captured by a digital camera or another suitable image sensor. For example, the images may represent respective frames of a video stream.

FIG. 3 schematically illustrates an example of three digital images of a target area, representing consecutive frames 211A-C, respectively, of a video stream. Frames 211A-C show images of a moving organism 212A-C, respectively, whose position within the image changes from frame to frame due to the movement of the organism within the target area. Frame 211B shows another organism 213 which is only visible in a single frame, e.g. due to the high speed at which the organism has moved.

Again referring to FIG. 2 and with continued reference to FIG. 3, in step S2, the process detects objects in the individual frames. To this end, each image frame is searched using a sliding window of variable size or by dividing the frames into some type of search grid to create a search space consisting of windows that might contain the target object. The object or objects one wants to track in each frame is reduced to specifically selected features (e.g. colour, shape, intensity, edges, histogram, texture and/or the like) or features learned through machine learning techniques trained on the object to detect. At each smaller window searched (sliding window frame or grid frame) the features of that window are evaluated and compared to the features of the target object. If features are similar enough to the target object, this window is marked as containing the target object. If the object is detected in many of the windows, the window with the most similar feature values might be chosen as a match. If the matched windows are overlapping, an average of their positions in the frame might also be considered as the position of the detected target object. In the example of FIG. 3, the process has detected objects 212A-C and 213.

In subsequent step S3, the process performs object matching between frames: If multiple objects are detected in one frame, e.g. as illustrated in frame 211B, the features of the detected objects in that frame are used to find the best match among the detected objects in the following frame.

To this end the process may initially restrict the search area. In particular, the process may restrict the object detection search area in the following frame to physically possible locations based on information such as location, trajectory, direction and/or velocity of the tracked object calculated from previous frames.

Moreover, the process may consider adaptable object features between frames. For example, between the first and the last frame in a video sequence, the same object might have changed appearance a bit due to e.g. different orientation of the object when it was first detected and when it leaves the video frame or during movements of the organism. This change is likely a lot smaller between two adjacent frames and thus the characteristic features of the tracked object can be adapted/updated each frame either by combining the feature values of the same object between adjacent frames or by changing the features values to those calculated for the object in the most recent frame it was detected.

In subsequent step S4, the process creates a representation of a detected trajectory. In particular, when the location of the same object has been detected between adjacent frames the shift between these locations is what creates the trajectory for each object. Hence, the sequence of locations of an identified object may be used as a representation of the trajectory of the object. In some embodiments, the process may fit a curve through the detected locations.

The process may further record additional properties, e.g. a speed of the move object based on the distance between detected locations in consecutive frames, the recorded features along the trajectory, etc.

In step S5, the process may use a suitable classification model, e.g. based on neural networks or another suitable classifier to identify the moving organism from the trajectory and, optionally, from the additional features, such as speed, color, shape, etc. In some embodiments, the classification model may further receive inputs from other detectors (or processed data based on signals from other detectors), e.g. recorded wing beat frequencies, etc.

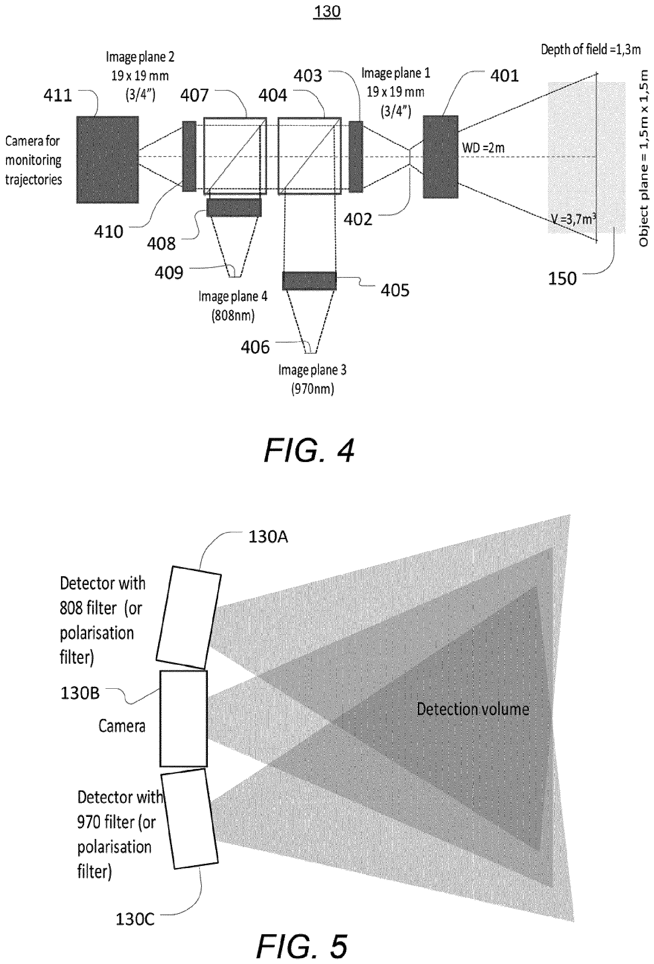

FIG. 4 schematically illustrates an example of a detector module of an embodiment of an apparatus described herein. The detector module comprises an image sensor 411 and two photodiode arrays 405 and 409, respectively. The image sensor 411 records an image of a target space in the form of a detection volume 150 as described above. To this end the detector module comprises lenses 401, 403 and 410 for imaging on object plane in the detection volume at a suitable depth of field onto the image sensor. In particular, lens 401 images the object plane onto a virtual image plane 420. Lens 403 collimates the light from the virtual image plane and lens 410 focusses the collimated light onto the image sensor. A part of the collimated light is directed by beam splitter 404 towards another lens which focusses the light onto photodiode array 405. Similarly, another portion of the collimated light is directed by beam splitter 407 onto lens 408 which focusses the light onto photodiode array 409. The beam splitter 404 is configured to selectively direct light at a first wavelength, e.g. 970 nm, onto photodiode array 405, while beam splitter 407 is configured to selectively direct light at a second, different, wavelength, e.g. 808 nm, onto photodiode array 409.

The photodiodes of each array thus detect time-resolved backscattered light from respective portions of the detection volume. Alternatively, the photodiode arrays may be replaced by individual photodiodes or by image sensors.

Based on the recorded images by the image sensor 411, a processing unit may detect trajectories of pests or other organisms and identify the pests based on the detected trajectories as described herein.

Additionally, based on the obtained signals from the photodiode arrays, the system may detect pests in the respective parts of the detection module based on detected wing beat frequency, glossiness and/or melanisation, e.g. as described in WO 2018/182440.

It has been found that a combination of the detected trajectories with one or more other indicators, such as those obtained from other detector signals, allows for a particularly reliable detection of pests, including pests that are only difficult to detect based on e.g. wing beat frequency alone.

Yet further, while the embodiment of FIG. 4 utilises a combined optical system to direct light onto multiple sensors, alternative detector modules may comprise separate detectors, each having their own optical system, e.g. as illustrated in FIG. 5 below.

FIG. 5 schematically illustrates another example of a detector module of an embodiment of an apparatus described herein. In particular, FIG. 5 illustrates a detector module comprising three detectors 130A-C, respectively, each receiving light from a common detection volume that is illuminated by a common illumination module (not shown). In yet alternative embodiments, the detectors may receive light from different detection volumes which may be illuminated by a common or by respective illumination modules. Each of the detectors 130A-C include their own optical system, e.g. their own lenses etc.

In the present example, the detector module comprises a detector 130A for detecting light at a first wavelength and, optionally, at a first polarisation state. To this end, detector 130A may comprise a suitable band-pass filter, e.g. a filter selectively allowing light of 808 nm to reach a sensor of the detector, e.g. a photodiode or photodiode array. The detector 130A may further comprise a polarisation filter.

Detector 130B includes a digital camera, e.g. as described in connection with FIG. 1 or 4.

Detector 130C is configured for detecting light at a second wavelength (different and spaced apart from the first wavelength) and, optionally, at a second polarisation state. To this end, detector 130C may comprise a suitable band-pass filter, e.g. a filter selectively allowing light of 970 nm to reach a sensor of the detector, e.g. a photodiode or photodiode array. The detector 130C may further comprise a polarisation filter.

It will be appreciated, that alternative pest sensors may comprise additional or alternative detectors, e.g. fewer than three or more than three detectors.

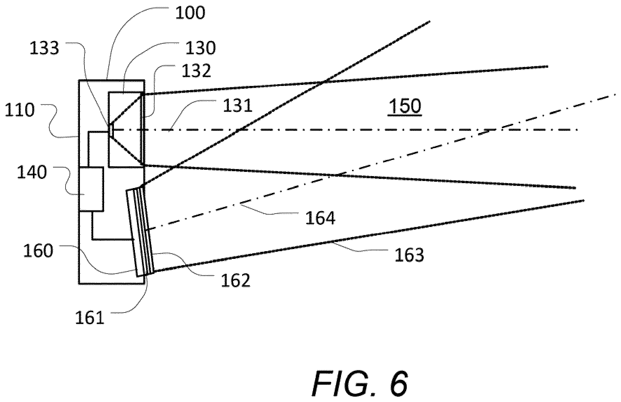

FIG. 6 schematically illustrates another embodiment of an apparatus for detecting organisms. The apparatus, generally designated by reference numeral 100, comprises a processing unit 140, a detector module 130 and an illumination module 160, all accommodated within a housing 110. In this example, the illumination module and the detector module are vertically aligned with each other and the illumination module is arranged below the detector module. However, other arrangements are possible as well.

The illumination module comprises an array of light-emitting diodes (LEDs) 161 and a corresponding array of lenses 161 for directing the light from the respective LEDs as a diverging beam 163 along an illumination direction 164. The array of light emitting diodes may comprise a first set of diodes configured to selectively emit light at a first wavelength range, e.g. at 810 nm +/- 25 nm. The array of light emitting diodes may further comprise a second set of diodes configured to selectively emit light at a second wavelength range, different from the first wavelength range, in particular spaced-apart from the first wavelength range, e.g. at 980 nm +/- 25 nm. In other embodiments, the array of light emitting diodes may include alternative or additional types of LEDs. For example, in some embodiments, the LEDs may be configured to emit broad-band visible, near-infrared and/or infrared light.

The detector module 130 comprises an imaging system 132 in the form of a Fresnel lens. Alternative another lens system may be used. The detector module 130 includes an image sensor 133, e.g. a CCD or CMOS sensor and the imaging system images an object plane 152 inside the illuminated volume onto the image sensor. The field of view of the imaging system and the depth of field of the imaging system are configured such that the imaging system images a portion of the volume illuminated by the illumination module onto the image sensor. The portion of the illuminated volume imaged by the imaging system such that it can be detected by the image sensor and used for detection of organisms defines a target space in the form of a detection volume 150. The imaging system 132 defines an optical axis 131 that intersects with the illumination direction 164 at a small angle, such as 10°.

For example, an imaging system based on a camera lens having f=24mm, f/2.8 and a ¾" image sensor configured to focus on an object plane at 2 m distance from the lens, the field of view is approximately 1.7 m × 1.7 m and the depth of field is approximately 1.3 m, thus resulting in a detection volume of approx. 3.7 m³.

The detector module 130 is communicatively coupled to the processing unit 140 and forwards the captured images to the processing unit. The processing unit 140 may include a suitably programmed computer or another suitable processing device or system. The processing unit receives the images and, optionally, further detector signals from the detector module and processes the received data so as to detect and identify images in the target space, e.g. by performing a process as described with reference with FIGs. 2-3.

Hence, in the above, embodiments have been described of an apparatus comprising a light source illuminating a target space, e.g. a detection volume, and an optical detection system which allows for tracing the trajectory and speed of insects or other organisms that move within the target space. Further the apparatus comprises a suitably programmed data processing system configured to identify insects or other organisms based on the movement alone or in combination with other detected properties/indicators.

Generally, embodiments of the apparatus described herein provide a detection volume that is large enough for the detector module to observe a number of insects representative for the population density in the area, e.g. an area to be treated with pesticides. The detection volume is also small enough to be sufficiently uniformly illuminated so as to provide high signal strength at the image sensor.

Moreover, embodiments of the apparatus described herein provide fast observation times, e.g. so as to provide actionable input to a control system of a pesticide sprayer moving about an area to be treated.

Moreover embodiments of the apparatus described herein provide long enough observation times to be able to classify insects or other pests based on observed trajectories.

Moreover, embodiments of the apparatus described herein are robust and have low complexity, thus making them cost efficient, durable and suitable for being deployed on moving vehicles.

Although the invention has been described with reference to certain specific embodiments, various modifications thereof will be apparent to those skilled in art without departing from the scope of the invention as defined by the claims appended hereto.

## Claims

1. An apparatus for detecting and identifying flying or jumping insects in farming or forestry production facilities, the apparatus comprising:
an illumination module (160) configured to simultaneously illuminate an entire target space (150) and comprising light source configured to emit a diverging beam of incoherent infrared or near-infrared light along an illumination direction;
a detector module (130) comprising an imaging system (132) and an image sensor (133, 411), the detector module being configured to receive backscattered light from organisms inside the target space and to capture a plurality of images of the illuminated target space, the target space comprising one or more organisms moving about said target space, wherein the imaging system defines an imaging optical axis, wherein the imaging optical axis and the illumination direction define an angle between each other, the angle being between 1° and 30°;
a processor (140) configured to:
- detect, from the captured images, a trajectory of an organism moving about said target space;
- recognize a type of organism from the detected trajectory.

2. An apparatus according to claim 1; wherein the processor is further configured to determine a property of the organism and/or of the movement of the organism at or along at least a part of the trajectory; and to recognize the type of organism from the detected trajectory and from the determined property.

3. An apparatus according to claim 2; wherein the detected property includes a velocity of the movement at or along at least a part of the trajectory.

4. An apparatus according to claim 2 or 3; wherein the detected property includes a change in appearance, of the organism at or along at least a part of the trajectory.

5. An apparatus according to any one of the preceding claims; wherein the illuminated target space defines a detection volume having a size of at least 0.2 m³, such as at least 0.5 m³, such as at least 1 m³, such as at least 2 m³.

6. An apparatus according to any one of the preceding claims, wherein the illuminated target space defines a detection volume having an aspect ratio, defined as a ratio of a largest edge to a smallest edge of a minimum bounding box of the detection volume, of no more than 5:1, such as no more than 3:1, such as no more than 2:1.

7. An apparatus according to any one of the preceding claims; wherein the processor is further configured to identify, from detector signals from one or more detectors, to identify one or more types of organisms and/or to determine respective populations of the one or more types of organisms in the target space based on one or more detected trajectories and from one or more further indicators; in particular further indicators chosen from:
- a detected speed of movement of an organism inside the target space;
- one or more detected wing beat frequencies;
- a melanisation ratio;
- a glossiness of the organism.

8. An apparatus according to any one of the preceding claims; wherein the illumination module comprises one or more light emitting diodes and/or one or more halogen lamps.

9. An apparatus according to any one of the preceding claims; wherein the divergence angle in at least one direction is between 2° and 45°, such as between 10° and 30°.

10. An apparatus according to any one of the preceding claims; comprising a housing accommodating the illumination module, the detector module and the processor.

11. An apparatus according to any one of the preceding claims; wherein the illumination module comprises a first light source configured to selectively emit light at a first wavelength range, and wherein the illumination module further comprises a second light source configured to selectively emit light at a second wavelength range, spaced-apart from the first wavelength range.

12. An apparatus according to any one of the preceding claims, wherein the angle defined between the imaging optical axis and the illumination direction define is between 5° and 20°.

13. An apparatus according to any one of the preceding claims, wherein the target space is a 3D detection volume completely defined by the field of view and depth of field of the imaging system, in particular as an overlap of the space illuminated by the illumination module and of a space defined by the field of view and depth of field of the imaging system.

14. Use of an apparatus according to any one of the preceding claims for detecting Cabbage Stem Flea Beetle; wherein the illuminated target space has an extent large enough to cover an essential part of a ballistic trajectory of a jumping Cabbage Stem Flea Beetle.

## Patentansprüche

1. Einrichtung zum Detektieren und Identifizieren fliegender oder springender Insekten in land- oder forstwirtschaftlichen Produktionsanlagen, wobei die Einrichtung Folgendes umfasst:
ein Beleuchtungsmodul (160), das so konfiguriert ist, dass es gleichzeitig einen gesamten Zielraum (150) beleuchtet, und eine Lichtquelle umfasst, die so konfiguriert ist, dass sie einen divergierenden Strahl aus inkohärentem Infrarot- oder Nahinfrarotlicht entlang einer Beleuchtungsrichtung emittiert;
ein Detektormodul (130), das ein Bildgebungssystem (132) und einen Bildsensor (133, 411) umfasst, wobei das Detektormodul so konfiguriert ist, dass es rückgestreutes Licht von Organismen innerhalb des Zielraums empfängt und eine Vielzahl von Bildern des beleuchteten Zielraums aufnimmt, wobei der Zielraum einen oder mehrere Organismen umfasst, die sich um den Zielraum bewegen, wobei das Bildgebungssystem eine optische Bildgebungsachse definiert, wobei die optische Bildgebungsachse und die Beleuchtungsrichtung einen Winkel zwischen 1° und 30° definieren;
einen Prozessor (140) der konfiguriert ist zum:
- Detektieren, aus den aufgenommenen Bildern, einer Flugbahn eines Organismus, der sich um den Zielraum bewegt;
- Detektieren einer Art von Organismus aus der detektierten Flugbahn.

2. Einrichtung nach Anspruch 1; wobei der Prozessor weiter konfiguriert ist, um eine Eigenschaft des Organismus und/oder der Bewegung des Organismus auf oder entlang mindestens eines Teils der Flugbahn zu bestimmen; und aus der detektierten Flugbahn und der bestimmten Eigenschaft die Art des Organismus zu detektieren.

3. Einrichtung nach Anspruch 2; wobei die detektierte Eigenschaft eine Geschwindigkeit der Bewegung auf oder entlang mindestens eines Teils der Flugbahn einschließt.

4. Einrichtung nach Anspruch 2 oder 3; wobei die detektierte Eigenschaft eine Veränderung im Aussehen des Organismus an oder entlang mindestens eines Teils der Flugbahn einschließt.

5. Einrichtung nach einem der vorstehenden Ansprüche; wobei der beleuchtete Zielraum ein Detektionsvolumen mit einer Größe von mindestens 0,2 m³, wie mindestens 0,5 m³, wie mindestens 1 m³, wie mindestens 2 m³ definiert.

6. Einrichtung nach einem der vorstehenden Ansprüche, wobei der beleuchtete Zielraum ein Detektionsvolumen definiert, das ein Seitenverhältnis, das als ein Verhältnis einer größten Kante zu einer kleinsten Kante eines minimalen Begrenzungsrahmens des Detektionsvolumens definiert ist, von nicht mehr als 5:1, wie nicht mehr als 3:1, wie nicht mehr als 2:1 aufweist.

7. Einrichtung nach einem der vorstehenden Ansprüche; wobei der Prozessor weiter konfiguriert ist, um anhand von Detektorsignalen von einem oder mehreren Detektoren einen oder mehrere Arten von Organismen zu identifizieren und/oder entsprechende Populationen des einen oder der mehreren Arten von Organismen im Zielraum basierend auf einer oder mehreren detektierten Flugbahnen und anhand eines oder mehrerer weiterer Indikatoren zu bestimmen; insbesondere weiteren Indikatoren, die ausgewählt sind aus:
- einer detektierten Bewegungsgeschwindigkeit eines Organismus innerhalb des Zielraums;
- einer oder mehreren detektierten Flügelschlagfrequenzen;
- einem Melanisierungsverhältnis;
- einem Glanz des Organismus.

8. Einrichtung nach einem der vorstehenden Ansprüche; wobei das Beleuchtungsmodul eine oder mehrere Leuchtdioden und/oder eine oder mehrere Halogenlampen umfasst.

9. Einrichtung nach einem der vorstehenden Ansprüche; wobei der Divergenzwinkel in mindestens einer Richtung zwischen 2° und 45° wie zwischen 10° und 30° liegt.

10. Einrichtung nach einem der vorstehenden Ansprüche; umfassend ein Gehäuse, das das Beleuchtungsmodul, das Detektormodul und den Prozessor aufnimmt.

11. Einrichtung nach einem der vorstehenden Ansprüche; wobei das Beleuchtungsmodul eine erste Lichtquelle umfasst, die konfiguriert ist, um selektiv Licht in einem ersten Wellenlängenbereich zu emittieren, und wobei das Beleuchtungsmodul weiter eine zweite Lichtquelle umfasst, die konfiguriert ist, um selektiv Licht in einem zweiten Wellenlängenbereich zu emittieren, der vom ersten Wellenlängenbereich beabstandet ist.

12. Einrichtung nach einem der vorstehenden Ansprüche, wobei der zwischen der optischen Bildgebungsachse und der definierten Beleuchtungsrichtung definierte Winkel zwischen 5° und 20° liegt.

13. Einrichtung nach einem der vorstehenden Ansprüche, wobei der Zielraum ein 3D-Detektionsvolumen ist, das vollständig durch das Sichtfeld und die Schärfentiefe des Bildgebungssystems definiert ist, insbesondere als Überlappung des vom Beleuchtungsmodul beleuchteten Raums und eines Raums, der durch das Sichtfeld und die Schärfentiefe des Bildgebungssystems definiert wird.

14. Verwendung einer Einrichtung nach einem der vorstehenden Ansprüche zum Nachweis von Rapserdflöhen; wobei der beleuchtete Zielraum eine Ausdehnung aufweist, die groß genug ist, um einen wesentlichen Teil einer ballistischen Flugbahn eines springenden Rapserdflohs abzudecken.

## Revendications

1. Appareil pour détecter et identifier des insectes en train de voler ou de sauter, dans des installations de production agricoles ou forestières, l'appareil comprenant :
un module d'éclairage (160) configuré pour simultanément éclairer un espace cible entier (150) et comprenant une source de lumière configurée pour émettre un faisceau divergeant de lumière incohérente infrarouge ou infrarouge proche le long d'une direction d'éclairage ;
un module détecteur (130) comprenant un système d'imagerie (132) et un capteur d'image (133, 411), le module détecteur étant configuré pour recevoir de la lumière rétrodiffusée à partir d'organismes à l'intérieur de l'espace cible et pour capturer une pluralité d'images de l'espace cible éclairé, l'espace cible comprenant un ou plusieurs organismes se déplaçant dans ledit espace cible, dans lequel le système d'imagerie définit un axe optique d'imagerie, dans lequel l'axe optique d'imagerie et la direction d'éclairage définissent un angle entre eux, l'angle étant entre 1° et 30° ;
un processeur (140) configuré pour :
- détecter, à partir des images capturées, une trajectoire d'un organisme se déplaçant dans ledit espace cible ;
- reconnaître un type d'organisme à partir de la trajectoire détectée.

2. Appareil selon la revendication 1, dans lequel le processeur est en outre configuré pour déterminer une propriété de l'organisme et/ou du mouvement de l'organisme à au moins une partie, ou le long de cette dernière, de la trajectoire ; et pour reconnaître le type d'organisme à partir de la trajectoire détectée et à partir de la propriété déterminée.

3. Appareil selon la revendication 2, dans lequel la propriété détectée inclut une vélocité du mouvement à au moins une partie, ou le long de cette dernière, de la trajectoire.

4. Appareil selon la revendication 2 ou 3, dans lequel la propriété détectée inclut un changement d'apparence de l'organisme à au moins une partie, ou le long de cette dernière, de la trajectoire.

5. Appareil selon l'une quelconque des revendications précédentes, dans lequel l'espace cible éclairé définit un volume de détection présentant une taille d'au moins 0,2 m³, par exemple d'au moins 0,5 m³, par exemple d'au moins 1 m³, par exemple d'au moins 2 m³.

6. Appareil selon l'une quelconque des revendications précédentes, dans lequel l'espace cible éclairé définit un volume de détection présentant un rapport d'aspect, défini comme étant un rapport d'un bord le plus grand par rapport à un bord le plus petit d'une boîte englobante minimum du volume de détection, non supérieur à 5 : 1, par exemple non supérieur à 3 : 1, par exemple non supérieur à 2 : 1.

7. Appareil selon l'une quelconque des revendications précédentes, dans lequel le processeur est en outre configuré pour identifier, à partir de signaux de détecteur provenant d'un ou de plusieurs détecteurs, un ou plusieurs types d'organismes et/ou pour déterminer des populations respectives des un ou plusieurs types d'organismes dans l'espace cible sur la base d'une ou plusieurs trajectoires détectées et à partir d'un ou plusieurs indicateurs supplémentaires ; en particulier des indicateurs supplémentaires choisis parmi :
- une vitesse détectée de mouvement d'un organisme à l'intérieur de l'espace cible ;
- une ou plusieurs fréquences détectées de battement d'aile ;
- un rapport de mélanisation ;
- une brillance de l'organisme.

8. Appareil selon l'une quelconque des revendications précédentes, dans lequel le module d'éclairage comprend une ou plusieurs diodes électroluminescentes et/ou une ou plusieurs lampes halogènes.

9. Appareil selon l'une quelconque des revendications précédentes, dans lequel l'angle de divergence dans au moins une direction est entre 2° et 45°, par exemple entre 10° et 30°.

10. Appareil selon l'une quelconque des revendications précédentes, comprenant un boîtier logeant le module d'éclairage, le module détecteur et le processeur.

11. Appareil selon l'une quelconque des revendications précédentes, dans lequel le module d'éclairage comprend une première source de lumière configurée pour sélectivement émettre de la lumière à une première plage de longueurs d'onde, et dans lequel le module d'éclairage comprend en outre une seconde source de lumière configurée pour sélectivement émettre de la lumière à une seconde plage de longueurs d'onde, espacée de la première plage de longueurs d'onde.

12. Appareil selon l'une quelconque des revendications précédentes, dans lequel l'angle défini entre l'axe optique d'imagerie et la direction d'éclairage est entre 5° et 20°.

13. Appareil selon l'une quelconque des revendications précédentes, dans lequel l'espace cible est un volume de détection 3D complètement défini par le champ de vue et une profondeur de champ du système d'imagerie, en particulier sous la forme d'un chevauchement de l'espace éclairé par le module d'éclairage et d'un espace défini par le champ de vue et une profondeur de champ du système d'imagerie.

14. Utilisation d'un appareil selon l'une quelconque des revendications précédentes, pour détecter l'altise du chou ; dans laquelle l'espace cible éclairé présente une étendue suffisamment grande pour couvrir une partie essentielle d'une trajectoire balistique d'une altise du chou en train de sauter.
